Europäisches Patentamt

European Patent Office

Office européen des brevets

(19)

(11) Numéro de publication: **0 173 633**
**B1**

(12) ## FASCICULE DE BREVET EUROPEEN

(45) Date de publication du fascicule du brevet:
**07.12.88**

(51) Int. Cl.⁴: **A 22 C 11/12,** A 22 C 11/00

(21) Numéro de dépôt: **85420140.7**

(22) Date de dépôt: **24.07.85**

(54) **Machine autorisant le chargement et la coupe d'au moins une extrémité d'un boyau de saucisson et produits similaires.**

(30) Priorité: **26.07.84 FR 8412165**

(43) Date de publication de la demande:
**05.03.86 Bulletin 86/10**

(45) Mention de la délivrance du brevet:
**07.12.88 Bulletin 88/49**

(84) Etats contractants désignés:
**BE CH DE IT LI**

(56) Documents cités:
**EP-A- 0 059 940**
**EP-A- 0 080 422**
**US-A- 2 716 751**
**US-A- 3 061 838**

(73) Titulaire: **ETABLISSEMENTS CHARLES FRERES & CIE, S.A., F-42580 L'Etrat (FR)**

(72) Inventeur: **Pujol, Yves, 15 rue Plantevin, F-81000 Albi (FR)**
Inventeur: **Charles, Albert, Le Perthuis, F-43200 Yssingeaux (FR)**

(74) Mandataire: **Dupuis, François, Cabinet Charras 3 Place de l'Hôtel-de-Ville, F-42000 St.Etienne (FR)**

ACTORUM AG

## Description

La présente invention a pour objet une machine autorisant le chargement dans la machine même et la coupe d'au moins une extrémité d'un boyau de saucisses, saucissons et produits similaires, ladite extrémité ayant été ficelée dans une phase précédente ou pouvant l'être simultanément.

L'invention se rattache au secteur technique des produits de salaisons en particulier saucisses et saucissons, et aux machines et moyens de mise en œuvre pour leur fabrication.

Selon l'art antérieur, le fabricant de boyaux livre aux salaisonniers des boyaux qui sont attachés à l'une de leurs extrémités par une ficelle ou moyen analogue; puis ces derniers remplissent de viande manuellement ou par des moyens mécaniques lesdits boyaux en la tassant plus ou moins. Il y a lieu alors de procéder à la fermeture du boyau en ligaturant sa seconde extrémité, cette opération pouvant se faire par tous moyens manuels ou mécaniques appropriés.

Il y a lieu de citer au titre de l'art antérieur le Brevet Européen 0080422 au nom du déposant pour illustrer un moyen particulier de positionnement, centrage, et serrage de l'extrémité d'un boyau en vue d'une phase opératoire ultérieure de coupe.

Le problème qui est posé dans la demande réside dans le fait que le volume du boyau rempli peut varier assez sensiblement en fonction de divers paramètres, de sorte que la seconde extrémité du boyau peut être de longueur très diverse. Outre les problèmes d'esthétique, cela peut constituer une gêne au niveau du conditionnement des produits.

L'invention a donc pour objet de remédier à ces inconvénients et propose une machine de conception simple assurant une présentation finale parfaite du produit. Cette machine peut être utilisée dans plusieurs situations: la seconde ligature a été réalisée et il reste à couper l'extrémité du boyau; la seconde ligature n'a pas été réalisée et les opérations de coupe et de ligaturage s'effectuent simultanément. Dans ce cas, la machine, objet de l'invention, est posiotinnée adjacente à un poste de ligaturage connu en soi.

Selon une première caractéristique de l'invention, ladite machine comprend un moyen profilé en Vé constitué de deux flasque espacés pour le positionnement et centrage d'une extrémité dudit boyau, un moyen de serrage de ladite partie de boyau positionnée et un moyen de coupe, ladite machine étant caractérisée en ce qu'elle comprend:
– un bâti (B) aménagé pour recevoir un réceptacle de chargement (R) d'un saucisson, ce réceptacle étant disposé et orienté dans un plan transversal au bâti (B);
– un premier dispositif de serrage (S) et d'appui de l'extrémité à couper dudit boyau, ce dispositif comprenant le moyen profilé en Vé et étant disposé avec capacité de translation sur le réceptacle (R);

– un dispositif de coupe (C) de l'extrémité dudit boyau situé à l'extrémité arrière du réceptacle, c'est-à-dire l'extrémité opposée à celle du chargement;
– des moyens (A, V) pour translater le premier dispositif de serrage (5) dans le réceptacle, et simultanément du saucisson maintenu, d'une position de prise en charge avec serrage simultané de son extrémité à couper par le premier dispositif de serrage du saucisson vers le dispositif de coupe (C);
– un second dispositif de serrage (16) à position fixe sur le bâti adjacent au dispositif de coupe (C) et disposé de l'autre coté de ce dispositif de coupe (C) par rapport au premier dispositif de serrage (S), le second dispositif de serrage et le dispositif de coupe (C) agissant selon un cycle déterminé pour assurer, par le serrage complémentaire et la coupe, le dimensionnement régulier d'une ou des extrémités du boyau de saucisson.

Ces caractéristiques et d'autres encore ressortiront bien de la suite de la description.

Pour fixer l'objet de l'invention illustrée d'une manière non limitative aux figures des dessins où:

La figure 1 est une vue en perspective illustrant la machine selon l'invention avec sa partie de chargement des produits et le dispositif de coupe de l'une des extrémités d'un boyau.

La figure 2 est une vue en perspective partielle, à grande échelle, illustrant les moyens de serrage de l'extrémité du boyau à ligaturer en position repos.

La figure 3 est une vue en perspective partielle, à grande échelle, illustrant le serrage par un premier moyen de l'extrémité du boyau à ligaturer et la translation du boyau dans le réceptacle.

La figure 4 est une vue en perspective partielle, à grande échelle, illustrant le serrage par un second moyen complémentaire de l'extrémité dudit boyau à ligaturer.

La figure 5 est vue en perspective partielle à grande échelle illustrant la coupe de l'extrémité du boyau à une longueur déterminée.

La figure 6 est une vue en plan de la machine disposée adjacente à un poste de ligaturage.

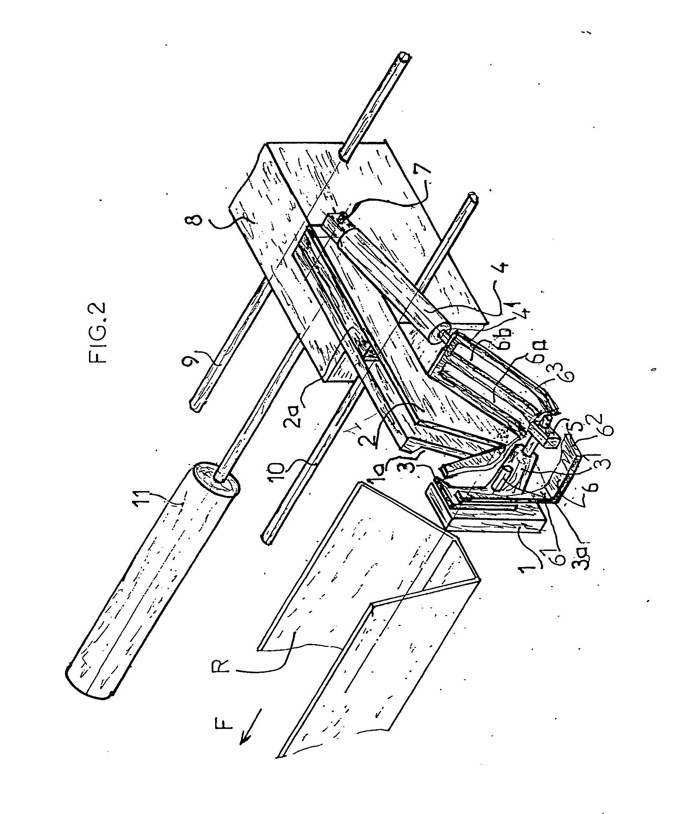

On doit considérer que pour rendre plus explicite le fonctionnement et les moyens de mise en œuvre de la machine, certaines parties de la machine ou moyens de mise en oeuvre ont été volontairement omises aux figures 2 à 5.

Afin de rendre plus concret l'objet de l'invention, on le décrit maintenant d'une manière non limitative illustrée aux figures des dessins.

La machine selon l'invention a pour fonction de réaliser le dimensionnement régulier de la seconde extrémité du boyau préalablement rempli et devant être ligaturé ou ayant été ligaturé. Les moyens de formation de ladite ligature peuvent être variés et constituent une opération indépendante.

Dans l'hypothèse où l'on veut réaliser la coupe du boyau et le ligaturage de sa seconde extrémité; la machine selon l'invention est disposée adjacente à un poste de ligaturage illustré en traits pointillés à la figure 6 des dessins. Un intervalle est prévu alors entre ladite machine et le poste précité, tout en assurant un guidage du saucisson, et l'opération de ligaturage peut s'effectuer par les moyens appropriés.

En se référant maintenant à l'invention, la machine comprend un bâti (B) rectangulaire, sur lequel est disposé transversalement un réceptacle (R) pour le positionnement d'un saucisson ou produit similaire dont l'extrémité libre du boyau reste à ligaturer. Le produit précité centré dans ledit réceptacle est guidé et maintenu par un dispositif de serrage (S). Ce dispositif est susceptible de coulisser le long dudit réceptacle, par exemple sous l'action d'une biellette (A) commandé par un vérin (V) associé audit bâti. Cette biellette pivote par rapport à un axe de rotation disposé à son extrémité et fixé sur une traverse (E) solidaire du bâti. Le dispositif de coupe est référencé dans son ensemble par (C) et se situe à l'extrémité arrière du réceptacle près de l'endroit de ligaturage. Le produit est disposé par l'avant de la machine en appui dans ledit réceptacle, son extrémité libre étant disposé et maintenu par le moyen de serrage (S), la partie pleine du produit étant disposée du côté du réceptacle orienté vers le dispositif de coupe.

En se référant maintenant à la figure 2, le dispositif de serrage et de chargement (S) comprend deux flasques (1) (2) parallèles et entretoisés en (2A) et sont disposé dans un plan perpendiculaire au réceptacle (R) en forme de goulotte.

Ces deux flasques ont une partie avant (1³–2³) présentant un profil extérieur complémentaire à celui de ladite goulotte et se prolongeant à l'arrière d'un côté (1¹–2¹) pour déborder au-dessus d'une aile de la goulotte pour être fixés à un coulisseau (8) ou autre moyen de liaison.

Par ailleurs, la partie avant intérieure des flasques (1–2) coulissant dans la goulotte présente une zône évasée en V (1²–2²) ouverte vers le haut. Dans son épaisseur, le flasque 1 présente un évidement conique (1a) permettant de préformer le saucisson en appui.

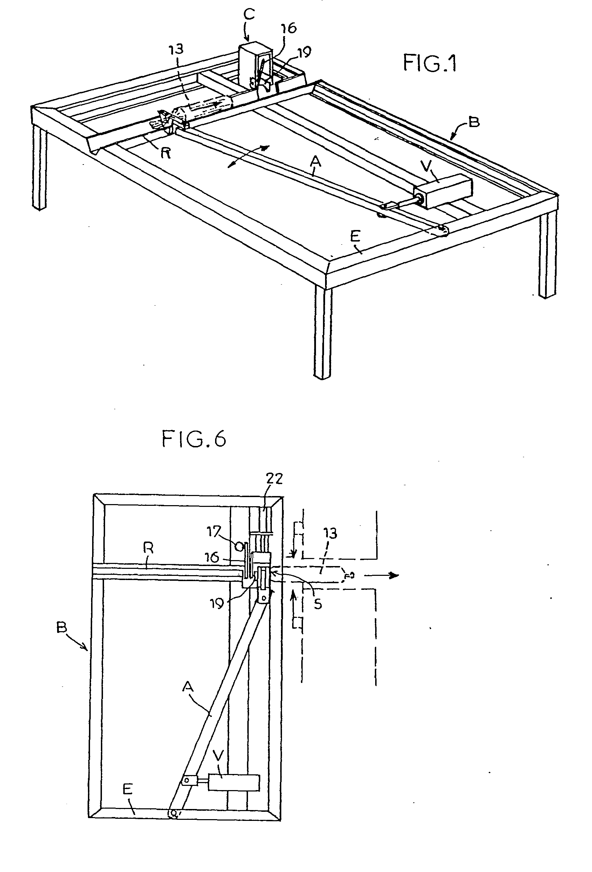

Ledit coulisseau (8) est associé directement ou indirectement à la tige d'un vérin autorisant son déplacement. La mise en œuvre peut être celle illustrée figure 1 avec le vérin (V) et la biellette intermédiaire (A), celle-ci étant solidaire du coulisseau. En variante selon la figure 2, la tige du vérin est directement associée au coulisseau, des tiges (9–10) cylindriques parallèles entre elles et fixées au bâti, assurant le guidage en déplacement du coulisseau.

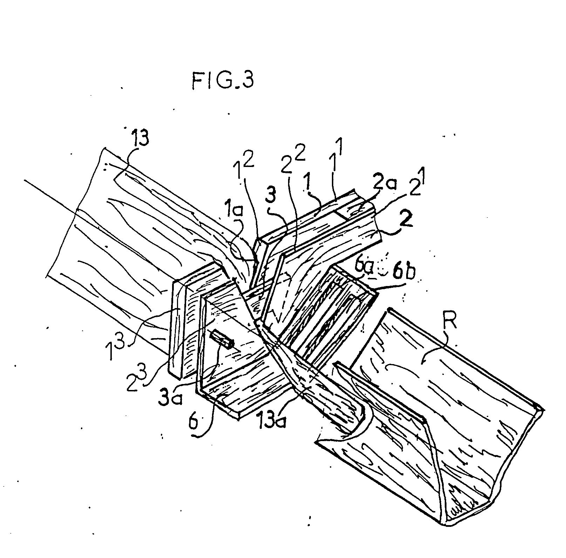

La partie vide de viande du boyau est serrée dans les Vés de centrage des flasques, le flasque (1) assurant le tassement de la viande par appui de la partie remplie. Le dispositif de serrge (S) comprend un premier moyen (3) établi sous forme d'un doigt profilé articulé autour d'un axe (3a) disposé entre les faces avant (1³–2³) des flasques. Le doigt (figure 3) assure un coincement de la partie vide du boyau avec le fond des parties en Vé desdites flasques. L'articulation dudit doigt (3) peut être assurée par tous moyens appropriés. Par exemple, en se référant à la figure 2, ledit doigt se prolonge à sa partie inférieure par un profilé (3¹) horizontal présentant un bossage (5) sur lequel prend appui l'extrémité de la tige (4¹) d'un vérin (4), lui-même fixé de manière appropriée au flasque (2). On comprend ainsi que le développement de ladite tige provoque le pivotement du doigt (3) par rapport à l'axe de rotation (3a).

Selon une autre caractéristique de l'invention; une patte (6) profilée est disposée devant le flasque (2) en étant fixée à ce dernier dans sa partie avant (2³) par une aile équerrée (6¹). Ladite patte (6) présente une forme largement évasée avec une partie horizontale (6²) se prolongeant par une partie inclinée (6³) vers le haut dans laquelle sont ménagées deux lumières (6a–6b) adjacentes dont la fonction sera décrite ultérieurement. Avantageusement, la partie d'appui de ladite patte se trouve notamment dans l'axe d'alignement des échancrures en Vés des flasques (1–2) pour assurer le positionnement de l'extrémité du boyau. Outre lesdites fonctions, la patte protège le système d'articulation du doigt (3), et également, ainsi qu'il apparaît à la figure 3, offre un plan d'appui de l'extrémité libre du boyau à couper et à ligaturer.

En se référant à la figure 3 qui représente le dispositif de serrage durant la translation du coulisseau dans la goulotte (R), le saucisson (13) est en position de chargement, le doigt (3) serrant, après pivotement, le boyau dans les Vés (1²–2²) de centrage des flasques. La partie vide (13a) du saucisson, de longueur variable, prend appui sur la patte (6).

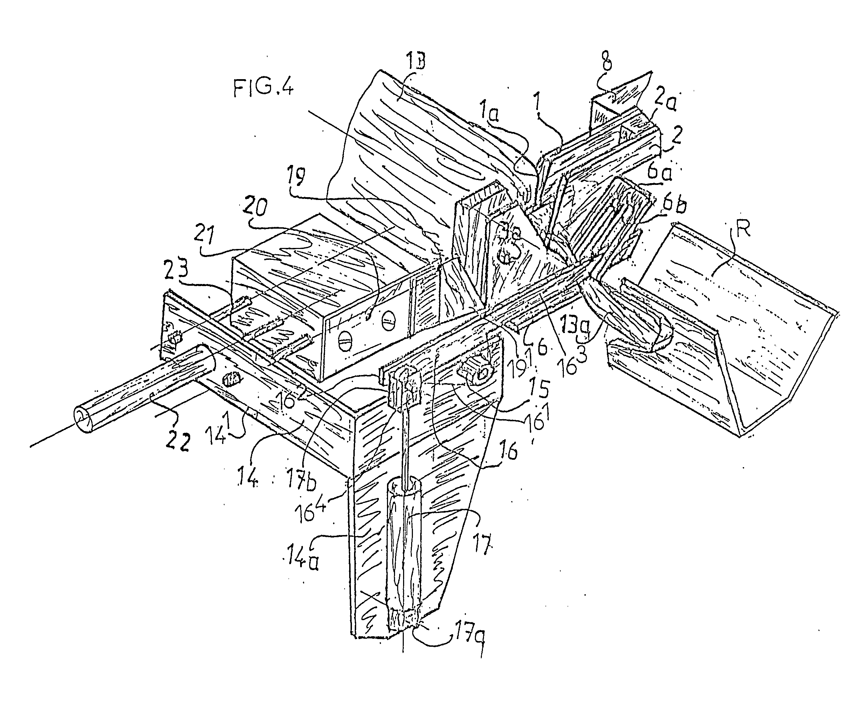

A la figure 4, le dispositif de serrage est en position de fin den course, le saucisson (13) déborde extérieurement de ladite machine. Il est soit laissé pendant ou maintenu par une console d'appui avant évacuation, si la seconde ligature a été préalablement réalisée, soit si la seconde ligature est réalisée simultanément à la coupe, introduit dans un tunnel réalisé sur le poste de ligaturage, ledit tunnel étant dans le prolongement de la goulotte (R) mais avec un léger décalage pour autoriser le passage du fil de ligature et des moyens nécessaires au ligaturage.

Dans la position fin de course précitée, un second moyen de serrage de l'extrémité du boyau intervient, ainsi que le dispositif de coupe. Le second moyen de serrage est constitué par un second doigt (16) articulé disposé dans un plan transversal en égard de la goulotte (R) et intervenant à proximité du flasque (2). Ledit doigt (16) présente une partie arrière (16¹) triangulaire montée sur un axe (15) de pivotement, celui-ci étant solidaire d'un plan d'appui (14) fixé au bâti de la machine. L'extrémité arrière (16²) présente un ergot (16⁴) débordant associé à une chapé (17b) solidaire de la tige d'un vérin (17) articulé en (17a) sur un axe solidaire dudit plan d'appui (14). L'extrémité avant (16³) dudit doigt est profilée pour pénétrer à l'intérieur de la lumière (6b) établie sur la patte (6). Le développement ou retrait de la tige du vérin provoque l'abaissement ou le relevage du doigt (16) à l'intérieur ou hors de ladite lumière (6b). L'abaissement du doigt provoque le serrage de l'extrémité du boyau en un deuxième point en appui contre la patte (6).

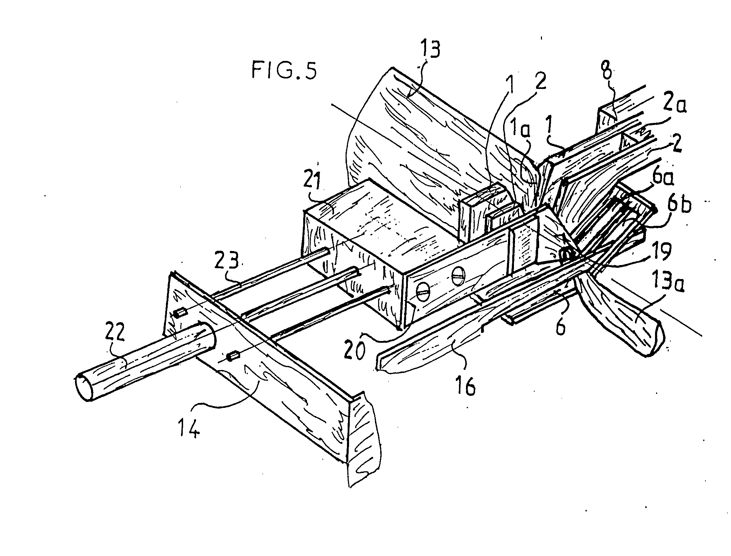

En se référant toujours à la figure 4, on a illustré le dispositif de coupe du boyau. A cet effet, il comprend une lame de coupe (19) effilée avec une légère inclinaison (19¹) vers le bas, montée sur un porte-lame (20) rapporté et fixé sur un coulisseau (21). La lame se trouve dans un plan transversal au plan longitudinal de la goulotte (R). Cette lame est translatée sous l'action d'un vérin (22) dont la tige est associée audit coulisseau. Ce vérin est monté sur le plan d'appui (14) qui présente une partie verticale équerrée (14¹) à partir de laquelle sont également positionnées des barres de guidage (23) sur lesquelles se déplace le coulisseau (21). Le développement ou le retrait de la tige du vérin provoque l'engagement de la lame de coupe dans la lumière (6a) assurant ainsi le sectionnement du boyau (figure 5).

La coupe étant effectuée, les doigts (3 et 16) sont relevés libérant ainsi le saucisson et la partie de boyau coupée.

Le morceau de boyau (13a) tombe dans la goulotte (R) puis est ramené par le dispositif de chargement vers l'entrée de la goulotte pour un nouveau cycle, ledit morceau étant évacué en tombant dans un récipient disposé en-dessous de la goulotte.

La saucisson est évacué de toute manière appropriée.

Les avantages ressortent bien de la description. On souligne la présentation parfaite du produit final, la possibilité d'utiliser la machine quelque soit la nécessité ou non d'effectuer la seconde ligature, la simplicité de sa réalisation.

Lorsque la présente machine est utilisée en combinaisons avec des systèmes automatiques de ligaturages.

On signale la forme avantageuse du flasque 1 qui permet lorsque le système est associé à un système de nouage d'assurer un centrage parfait et la mise en forme plus esthétique du produit.

On peut également prévoir que la machine soit aménagée pour effectuer la coupe alternée ou simultanée des deux extrémités du saucisson, dans l'hypothèse où le produit présenté aurait été ligaturé à ses deux extrémités préalablement. Dans ce cas, on prévoit le long de ladite goulotte un deuxième poste de serrage d'une extrémité du saucisson et de coupe de celle-ci.

**Revendications**

1. Machine autorisant le chargement de saucissons ou de produits similaires dans la machine même et la coupe d'au moins une extrémité de leur boyau, ladite machine étant du type comprenant un moyen profilé en Vé constitué de deux flasques (1, 2) espacés pour le positionnement et centrage d'une extrémité dudit boyau, un moyen de serrage de ladite partie de boyau positionnée et un moyen de coupe (C), ladite machine étant caractérisée en ce qu'elle comprend:
– un bâti (B) aménagé pour recevoir un réceptacle de chargement (R) d'un saucisson ce réceptacle étant disposé et orienté dans un plan transversal au bâti (B);
– un premier dispositif de serrage (S) et d'appui de l'extrémité à couper dudit boyau, ce dispositif comprenant le moyen profilé en Vé et étant disposé avec capacité de translation sur le réceptacle (R);
– un dispositif de coupe (C) de l'extrémité dudit boyau situé à l'extrémité arrière du réceptacle, c'est-à-dire l'extrémité opposée à celle du chargement;
– des moyens (A, V) pour translater le dispositif de serrage (5) dans le réceptacle, et simultanément du saucisson maintenu, d'une position de prise en charge du saucisson avec serrage simultané de son extrémité à couper par le premier dispositif de serrage, vers le dispositif de coupe (C);
– un second dispositif de serrage (16) à position fixe sur le bâti adjacent au dispositif de coupe (C) et disposé de l'autre coté de ce dispositif de coupe (C) par rapport au premier dispositif de serrage (S), le second dispositif de serrage (16) et le dispositif de coupe (C) agissant selon un cycle déterminé pour assurer, par le serrage complémentaire et la coupe, le dimensionnement régulier d'une ou des extrémités du boyau de saucisson.

2. Machine selon la revendication 1, caractérisé en ce que le dispositif de serrage (5) mobile coulisse le long dudit réceptacle (R) sous l'action d'une biellette (A) commandée par un vérin (V) associé audit bâti; ladite biellette pivotant par rapport à un axe de rotation disposé à son extrémité et fixé sur une entretoise (E) solidaire du bâti.

3. Machine selon la revendication 1, caractérisé en ce que le dispositif de serrage (S) mobile dans le réceptacle ou goulotte (R) comprend deux flasques (1) (2) parallèles et entretoisés disposés transversalement au réceptacle, lesdits flasques présentant un profil évasé vers le haut pour autoriser l'engagement et la retenue de l'extrémité libre du boyau de saucisson; et un moyen (3) sous forme de doigt disposé et articulé entre lesdits flasques pour assurer, après pivotement, le maintien ferme par pinçage de ladite extrémité du boyau de saucisson, l'articulation dudit doigt se faisant par tous moyens appropriés fixés au bâti.

4. Machine selon la revendication 3, caractérisée en ce que les flasques (1) (2) présentent une partie avant avec un profil extérieur complémentaire à celui de ladite goulotte et un profil intérieur évasé vers le haut; la partie arrière desdits flasques étant agencée pour coopérer avec les moyens de commande en déplacement du dispositif de serrage le long du réceptacle.

5. Machine selon les revendications 1 et 3 ensemble, caractérisée en ce qu'une patte (6) profilée est disposée et fixée devant le flasque 2, et présentant une forme évasée avec une partie horizontale (6²) formant plan d'appui, et par une partie inclinée (6³) vers le haut sur laquelle sont ménagées deux lumières (6a–6b) adjacentes; la partie d'appui de ladite patte se trouvant notamment dans l'axe d'alignement des échancrures en Vé des flasques (1–2) pour assurer le positionnement de l'extrémité du boyau.

6. Machine selon les revendications 1, 3 et 5 ensemble, caractérisée en ce que le second moyen de serrage à position fixe sur le bâti, disposé en bout du réceptacle, est constitué par un second doigt (1b) articulé disposé dans un plan horizontal audit réceptacle; ledit doigt ayant une extrémité arrière (16¹) pour son pivotement associé à un moyen de commande fixé au bâti et une extrémité avant (16³) profilée pour pénétrer à l'intérieur de la lumière (6b) établie sur la patte (6); l'abaissement dudit doigt assurant le serrage de l'extrémité du boyau sur un deuxième point en appui contre la patte (6).

7. Machine selon les revendications 1, 3, 5 et 6 ensemble, caractérisée en ce que le dispositif de coupe comprend une lame de coupe (19) effilée montée sur un porte-lame (20) solidaire d'un coulisseau (21) susceptible d'être translaté par un moyen de commande approprié fixé au bâti; ladite lame pénétrant dans la lumière (6a) de la patte assurant le sectionnement de la partie de boyau.

8. Machine selon la revendication 3 caractérisé en ce que le flaque (1) présente dans son épaisseur un évidement central conique pour autoriser le centrage parfait et la mise en forme du produit.

9. Machine selon la revendication 1 caractérisée en ce qu'elle est disposée adjacente à un poste de ligaturage en continu, le réceptacle ou goulotte de ladite machine étant en regard du tunnel du poste de ligaturage avec un intervalle pour le passage du fil de ligature et des moyens nécessaires au ligaturage.

## Patentansprüche

1. Maschine für die Beschickung von Würsten oder gleichartigen Produkten in die Maschine selber, und für das Zerschneiden an wenigstens einem Ende des Darms der besagten Würste oder gleichartigen Produkten, die in der Ausführung vorgesehen sind, die ein V-förmiges, aus zwei Wangen (1, 2) mit Zwischenraum für das Positionieren und das Zentrieren eines Endes des besagten Darms bestehendes Profiliermittel, ein Einspannmittel für den genannten positionierten Darmteil und ein Zerschneidemittel (C) aufweist, wobei die besagte Maschine durch die folgenden Bauteile gekennzeichnet ist:
- ein zur Aufnahme einer Beschickungsmulde (R) für eine Wurst eingerichtetes Gestell (B), wobei diese Mulde in einer Querebene zum Gestell (B) angebracht und orientiert ist;
- eine erste Einspann- und Abstützungsvorrichtung (S) für das abzuschneidende Ende des besagten Darms, wobei diese Vorrichtung das V-förmige Profiliermittel aufweist und mit Verschiebungsfähigkeit auf die Mulde (R) angeordnet ist;
- eine am Hinterende der Mulde, d.h. in dem dem Beschickungsende entgegengesetzten Ende befindliche Zerschneidevorrichtung (C) für das Ende des besagten Darms;
- die Mittel (A, V) zum Verschieben der ersten Einspannvorrichtung (S) in der Mulde, und gleichzeitig der festgehaltenen Wurst, von einer Wurstaufnahmestellung aus mit gleichzeitigem Einspannen des abzuschneidenden Wurstendes durch die erste Einspannvorrichtung, gegen die Zerschneidevorrichtung (C);
- eine in der Nähe der Zerschneidevorrichtung (C) mit Feststellung auf dem Gestell befindliche, zweite Einspannvorrichtung (16), die mit Bezug auf der ersten Einspannvorrichtung (S), der zweiten Einspannvorrichtung (16) und der Zerschneidevorrichtung (C) auf der anderen Seite dieser Zerschneidevorrichtung (C) angeordnet ist, und die gemäss einem vorbestimmten Arbeitsverhältnis wirkt, damit die regelmässige Dimensionierung der Enden des Wurstdarms durch das zusätzliche Einspannen und das entsprechende Abschneiden gesichert wird.

2. Maschine nach Anspruch 1, dadurch gekennzeichnet, dass die bewegliche Einspannvorrichtung (S) unter der Wirkung eines durch einen Druckzylinder (V) gesteuerten Stängchen (A) längs der besagten Mulde (R) gleitet, wobei der Zylinder (V) dem Gestell zugeordnet ist, und das genannte Stängchen mit Bezug auf eine Drehachse verschwenkt wird, die am Ende des Stängchens und auf einem dem Gestell zugeordneten Querträger (E) befestigt ist.

3. Maschine nach Anspruch 1, dadurch gekennzeichnet, dass die in die Mulde oder Rinne (R) bewegliche Einspannvorrichtung (S) zwei parallellaufenden, querversteiften, querseitig zur Mulde angebrachten Wangen (1) (2) aufweist, die für das Eingreifen und das Zurückhalten des freien Endes des Wurstdarms eine nach oben ausgeweitete Formgebung haben; und dass die genannte Einspannvorrichtung (S) auch ein fingerförmiges, zwischen den besagten Wangen angebrachtes und gelenkig montiertes Mittel (3) aufweist, damit das Festhalten durch Einklemmen des besagten Endes des Wursdarms nach dem Verschwenken gesichert wird, wobei die gelenkige Anordnung des genannten Fingers durch beliebige, auf dem Gestell befestigte geeignete Mittel stattfinden kann.

4. Maschine nach Anspruch 3, dadurch gekennzeichnet, dass die Wangen (1) (2) einen Vorderteil haben, der eine äusserliche, die Formgebung der besagten Rinne ergänzende Formgebung sowie eine nach oben ausgeweitete Innenformgebung aufweist, wobei der Hinterteil der besagten Wangen für Zusammenwirken mit den Steuermitteln für die Bewegung der Einspannvorrichtung längs der Mulde eingerichtet ist.

5. Maschine nach Ansprüchen 1 und 3 zusammen, dadurch gekennzeichnet, dass eine profilierte Lasche (6) vor der Wange (2) angeordnet und befestigt ist, und eine ausgeweitete Formgebung mit einem eine Abstützungsebene bildenden, waagrechten Teil (6²) aufweist, sowie mit einem nach obenzeigenden, geneigten Teil (6³), auf welchem zwei anliegende Öffnungen (6a–6b) vorgesehen sind, wobei der Abstützungsteil der genannten Lasche sich insbesondere in der Ausrichtelinie der V-förmigen Ausschnitte der Wangen (1–2) befindet, damit das Positionieren des Darmendes gesichert wird.

6. Maschine nach Ansprüchen 1, 3 und 5 zusammen, dadurch gekennzeichnet, dass das zweite am Ende der Mulde mit fester Stellung auf dem Gestell angebrachte Einspannmittel aus einem zweiten in einer mit Bezug auf die genannte Mulde gelenkig angeordneten Finger (1b) besteht, der für dessen Verschwenken in Verbindung mit einem auf dem Gestell befestigten Steuermittel ein Hinterende (16¹), und für die Einführung in den Innenraum der auf der Lasche (6) vorgesehenen Öffnung (6b) ein entsprechend profiliertes Vorderende (16³) aufweist, wobei das Senken des genanten Fingers das Einspannen des Darmendes auf einem zweiten Punkt in Abstützung gegen die Lasche (6) bewirkt.

7. Maschine nach Ansprüchen 1, 3, 5 und 6 zusammen, dadurch gekennzeichnet, dass die Zerschneidevorrichtung ein zugespitztes, auf einem mit einem Gleitblock (21) festgemachten Klingenträger (20) montiertes Schneideblatt (19) aufweist, wobei der Klingenträger durch ein geeignetes, auf dem Gestell befestigtes Steuermittel verschoben werden kann, und das genannte Schneideblatt in die Öffnung (6a) der Lasche eingeführt wird, um das Abschneiden des Darmteils zu bewirken.

## Claims

1. Machine for the loading of sausages or of similar products in the machine proper and the cutting off of at least one end of the gut casing of these sausages or similar products, said machine being of the type which comprises: a contoured Vee-shaped means consisting of two cheeks (1, 2) spaced apart for the positioning and the centering of one end of said gut casing; a means for clamping said positioned portion of the gut casing; and a cutting off means (C), said machine being characterized in that there is included therein;
– a framework (B) adapted for receiving a vessel (R) for loading a sausage, said vessel being arranged and directed within a plane transversely to the framework (B);
– a first clamping and abutment device (S) for the end to be cut off of said gut casing, this device being comprised of the contoured Vee-shaped means and being disposed with a capacity of translation on the vessel (R);
– a cutting off device (C) for cutting the end of said gut casing, located at the rear end of the vessel, i.e. at the end opposite the loading end;
– means (A, V) for the translation of the clamping device (5) within the vessel, and simultaneously of the maintained sausage, from a position of engagement of the sausage for the loading thereof, with simultaneous clamping of the end of said sausage to be cut off by the first clamping device, in the direction of the cutting off device (C);
– a second clamping device (16) with fixed positin on the framework, adjacent to the cutting off device (C) and disposed on the other side of this cutting off device (C) relative to the first clamping device (S), the second clamping device (16) and the cutting off device (C), and operating in accordance with a pre-determined cycle for the additional clamping, and the cutting off, the unvarying dimensioning of one of the ends of the sausage casing.

2. Machine as claimed in Claim 1, characterized in that the movable clamping device (S) is slidable along the said vessel (R) under the action of a small linking rod (A) controlled by a pressure cylinder (V) associated with said framework, said small linking rod being pivoted relative to a rotational axis disposed at the end thereof and secured to a bracing piece (E) integral with the framework.

3. Machine as claimed in Claim 1, characterized in that the clamping device (S) movable within the vessel or chute (R) includes two braced and parallel cheeks (1) (2) disposed transversely to the vessel, said cheeks having a flared shape upwardly in order to permit the free end of the sausage gut casing to be engaged and retained; and a means (3) in the form of a finger disposed and linked hingedly between said cheeks in order to provide, after swivelling, the secure holding by clamping of said end of the sausage gut casing, the hinged linking of said finger being provided by any suitable means secured to the framework.

4. Machine as claimed in Claim 3, characterized in that the cheeks (1) (2) have a front portion with an external contour complementary to the contour of said chute and an internal contour which is flared upwardly, the rear portion of said cheeks being adapted to co-operate with the means for controlling the motion of the clamping device along the vessel.

5. Machine as claimed in Claims 1 and 3 together, characterized in that a contoured lug (6) is disposed and secured in front of the cheek (2), and has a flared shape with a horizontal portion (6²) which forms a plane of abutment, and with an upwardly slanting portion (6³) on which two adjacent apertures (6a–6b) are provided, the plane of abutment of said lug lying more particularly within the axis of alignment of the Vee-shaped notches of the cheeks (1–2) for the positioning of the end of the gut casing.

6. Machine as claimed in Claims 1, 3 and 5 together, characterized in that the second clamping means with fiwed position on the framework, disposed at the end of the vessel, consists of a second finger (1b) linked hingedly and disposed within a plane horizontal to said vessel, said finger having a rear end (16¹) for the swivelling thereof associated with a control means secured to the framework, and a contoured front end (16³) for penetrating inside the aperture (6b) established on the lug (6), the clamping of the end of the gut casing on a second point in abutment against the lug (6) being provided by the lowering of said finger.

7. Machine as claimed in Claims 1, 3, 5 and 6 together, characterized in that the cutting off device includes a cutting blade with sharpened edge (19), said blade being mounted on a blade holder (20) integral with a slideblock (21) adapted to be translated by a suitable control means secured to the framework, said cutting blade penetrating within the aperture (6a) of the lug, for severing the portin of the gut casing.

FIG.1

FIG.6

FIG.2

FIG.3

FIG.4

FIG.5